# EUROPÄISCHE PATENTSCHRIFT

(11) **EP 2 678 151 B1**
(45) Veröffentlichungstag und Bekanntmachung des Hinweises auf die Patenterteilung: **09.08.2017**
(21) Anmeldenummer: 12706797.3
(22) Anmeldetag: 20.02.2012
(51) Int. Cl.: B32B 5/22, B32B 5/26, B32B 5/28, B32B 27/40

(54) **VERWENDUNG VON SCHICHTAUFBAUTEN IN WINDKRAFTANLAGEN**
USE OF LAYER STRUCTURES IN WIND ENERGY PLANTS
UTILISATION DE STRUCTURES STRATIFIÉES DANS DES ÉOLIENNES

(30) Priorität: 25.02.2011 DE 102011004723
(43) Veröffentlichungstag der Anmeldung: 01.01.2014
(73) Patentinhaber: Covestro Deutschland AG, 51373 Leverkusen (DE)
(72) Erfinder: LINDNER, Stefan, 50670 Köln (DE); FRANKEN, Klaus, 51467 Bergisch Gladbach (DE); PASSMANN, Dirk, 46145 Oberhausen (DE); NORDMANN, Peter, 41539 Dormagen (DE)
(74) Vertreter: Levpat
(86) Internationale Anmeldenummer: PCT/EP2012/052847
(87) Internationale Veröffentlichungsnummer: WO 2012/113748

(56) Entgegenhaltungen:
- WO-A1-2010/125012
- WO-A1-2012/022683

## Beschreibung

Die Erfindung betrifft die Verwendung von Schichtaufbauten bei der Herstellung von Rotorblättern für Windkraftanlagen sowie Rotorblätter für Windkraftanlagen.

Energie aus Windkraft gewinnt immer mehr an Bedeutung, so dass Windkraftanlagen, insbesondere die Rotorblätter und deren Herstellung intensiv untersucht und weiterentwickelt werden. Ein Hauptaugenmerk liegt dabei in der Qualität der hergestellten Rotorblätter und einer kostengünstigen Herstellung. Die bisher bekannten Rotorblätter für Windkraftanlagen bestehen aus faserverstärkten Kunststoffen auf der Basis von Harzen als Matrixmaterial, wie beispielsweise Polyesterharze (UP), Vinylesterharze (VE), Epoxidharze (EP). Die Herstellung der Blätter erfolgt hauptsächlich so, dass jeweils eine untere und eine obere Hälfte des Flügels in einem Stück hergestellt werden. Diese beiden Hälften werden anschließend aufeinander gelegt und verklebt. Zur Verstärkung werden Streben oder Gurte mit eingeklebt.

Bei der Herstellung der Flügelhälften werden zuerst Faserverbundwerkstoffe hergestellt, die aushärten müssen. Dieser Aushärteprozess ist sehr zeitaufwendig und nachteilig für eine schnelle Gesamtfertigung. Die Rotorblätter für Windkraftanlagen aus den vorgenannten Harzen werden üblicherweise durch Handlaminieren, Handlaminieren mit Unterstützung durch Prepregtechnologie, durch Wickelverfahren oder das vakuumunterstützte Infusionsverfahren hergestellt. Beim Handlaminieren wird zunächst eine Form präpariert, indem ein Trennmittel und gegebenenfalls ein Gelcoat auf die Formoberfläche aufgetragen werden. Anschließend werden nacheinander Glasgelege mit unidirektionaler oder biaxialer Orientierung in die Form gelegt. Danach wird das Harz auf das Gelege aufgetragen und manuell durch Rollen in das Gelege eingedrückt. Dieser Schritt kann entsprechend oft wiederholt werden. Zusätzlich können Gurte als Verstärkungsmaterial und sonstige Teile, wie z.B. Blitzschutzeinrichtungen eingearbeitet werden. Auf diese erste glasfaserverstärkte Schicht wird eine sogenannte Distanzschicht, in der Regel aus Balsaholz, Polyvinylchlorid (PVC)- oder Polyurethan (PUR)-Schaum, und eine zweite glasfaserverstärkte Schicht analog der ersten aufgetragen. Dieses Verfahren hat zwar den Vorteil, dass die Maschineninvestitionen gering und die Fehlererkennung und Korrekturmöglichkeit einfach sind, jedoch ist die Fertigung zu lohnintensiv, wodurch die Kosten des Verfahrens sehr hoch sind und die langen Fertigungszeiten führen zu mehr Fehlern und zu einem hohen Aufwand zur Qualitätssicherung.

Das Handlaminierverfahren mit Unterstützung durch Prepregtechnologie erfolgt ähnlich wie das einfache Handlaminierverfahren. Hierbei werden jedoch die sogenannten Prepregs (mit Harz getränkte vorgefertigte Glasmatten) außerhalb der Form hergestellt und dann in der Rotorblattform positioniert. Die gegenüber dem einfachen Handlaminieren durchgeführte Teilautomatisierung zur Fertigung der Prepregs führt zwar zu einer verbesserten Qualitätskonstanz bei der Rotorfertigung, jedoch erfordert der Schutz der Arbeiter vor den in den flüssigen Harzmischungen enthaltenen leichtflüchtigen Verbindungen einen nicht unerheblichen Aufwand (Arbeitsplatzsicherheit etc.). Beim Harzinjektionsverfahren (auch als "Resin Transfer Molding" (RTM) oder "Vakuumunterstütztes Resin Transfer Molding" (VA RTM) oder "SCRIMP Process" (**S**eemann **C**omposites **R**esin **I**nfusion **M**olding **P**rocess) werden die Formen präpariert, indem ein Trennmittel und eventuell ein Gelcoat aufgetragen werden. Anschließend werden die trockenen Fasermatten nach einem genauen Fertigungsplan in die Form gelegt. Die erste eingelegte Schicht wird später die nach außen gelegene Schicht des Rotorblattes ergeben. Anschließend werden die Distanzmaterialien eingelegt, worauf wieder Fasermatten platziert werden, die dann die innere Schicht der fertigen Rotorhälfte/- Rotorhalbschale bilden. Für die Herstellung von großen Formteilen, wie Rotorblättern wird bevorzugt mit vakuumunterstützten Infusionsverfahren gearbeitet. Mit einer vakuumfesten Folie wird dann die gesamte Form hermetisch geschlossen. Aus der so präparierten Form wird die Luft aus Fasermatten und Distanzmaterialien entzogen, bevor an verschiedenen Stellen das Harz in die Form (Raum zwischen Folie und Form) injiziert wird. Dieses Verfahren hat - wie auch die beiden vorher genannten - den Nachteil, dass die notwendige Aushärtezeit bis zur Entformung des Bauteils mit bis zu 12 Stunden sehr lang ist und die Produktivität der Anlagen dadurch sehr stark eingeschränkt ist.

Aufgabe der vorliegenden Erfindung war es daher, Rotorblätter zur Verfügung zu stellen, die die vorgenannten Nachteile nicht aufweisen und zudem kostengünstig in kürzerer Zeit und mit besseren mechanischen Eigenschaften, wie zum Beispiel einer höheren Festigkeit hergestellt werden können.

Diese Aufgabe konnte überraschenderweise dadurch gelöst werden, dass die Rotorblätter mit Polyurethan, das durch die Reaktion von Polyisocyanat mit Glyzerin gestartetem Polypropylenoxidpolyol erhältlich ist, als Kunststoff anstelle der oben genannten Harze hergestellt werden. Insbesondere in der äußeren Hülle des Rotorblattes wird erfindungsgemäß Polyurethan als Kunststoff verwendet; die eingesetzten Faserschichten in der äußeren Hülle werden damit beaufschlagt.

Gegenstand der Erfindung sind Rotorblätter für Windkraftanlagen gemäss Anspruch 2, die eine äußere Hülle aufweisen, die zumindest teilweise aus einem Schichtaufbau mit folgenden Schichten besteht
a) eine Trennmittelschicht
b) gegebenenfalls eine Gelcoatschicht
c) eine mit Kunststoff behandelte Faserschicht
d) gegebenenfalls eine Distanzhalterschicht
e) eine mit Kunststoff versehene Faserschicht
f) gegebenenfalls eine Kunststofffolie
hergestellt durch das vakuumunterstützte Infusionsverfahren,
und die dadurch gekennzeichnet ist, dass als Kunststoff Polyurethan eingesetzt wird, das erhältlich ist durch Umsetzung eines Reaktionsgemisches bestehend aus
A) einem oder mehreren Polyisocyanaten
B) einer Polyolformulierung enthaltend ein oder mehrere mit Glyzerin gestartete Polypropylenoxidpolyole
C) gegebenenfalls Additiven und/oder Zusatzmitteln
D) gegebenenfalls Füllstoffen.

Ein weiterer Gegenstand der Erfindung ist ein Verfahren zur Herstellung der erfindungsgemäßen Rotorblätter für Windkraftanlagen gemäss Anspruch 3, die eine äußere Hülle aufweisen, die zumindest teilweise aus einem Schichtaufbau mit folgenden Schichten besteht
a) eine Trennmittelschicht
b) gegebenenfalls eine Gelcoatschicht
c) eine mit Kunststoff behandelte Faserschicht
d) gegebenenfalls eine Distanzhalterschicht
e) eine mit Kunststoff versehene Faserschicht
f) gegebenenfalls eine Kunststofffolie
hergestellt durch das vakuumunterstützte Infusionsverfahren,
dadurch gekennzeichnet, dass die Faserschichten mit einem Reaktionsgemisch zur Herstellung von Polyurethan als Kunststoff behandelt werden, wobei das Reaktionsgemisch aus den Komponenten
A) einem oder mehreren Polyisocyanaten
B) einer Polyolformulierung enthaltend ein oder mehrere mit Glyzerin gestartete Polypropylenoxidpolyole
C) gegebenenfalls Additiven und/oder Zusatzmitteln
D) gegebenenfalls Füllstoffen.

Ein weiterer Gegenstand der Erfindung ist die Verwendung eines Schichtaufbaus hergestellt durch das vakuumunterstützte Infusionsverfahren bei der Herstellung von Rotorblättern für Windkraftanlagen gemäss Anspruch 1, wobei der Schichtaufbau folgende Schichten aufweist
a) eine Trennmittelschicht
b) gegebenenfalls eine Gelcoatschicht
c) eine mit Kunststoff behandelte Faserschicht
d) gegebenenfalls eine Distanzhalterschicht
e) eine mit Kunststoff versehene Faserschicht
f) gegebenenfalls eine Kunststofffolie
und dadurch gekennzeichnet ist, dass als Kunststoff Polyurethan eingesetzt wird, das erhältlich ist durch Umsetzung eines Reaktionsgemisches bestehend aus
A) einem oder mehreren Polyisocyanaten
B) einer Polyolformulierung enthaltend ein oder mehrere mit Glyzerin gestartete Polypropylenoxidpolyole
C) gegebenenfalls Additiven und/oder Zusatzmitteln
D) gegebenenfalls Füllstoffen.

Für die Trennmittelschicht werden bevorzugt silikon- oder wachshaltige Trennmittel eingesetzt. Diese sind aus der Literatur bekannt. Gegebenenfalls kann als Trennmittelschicht auch eine Trennfolie verwendet werden.

Die Gelcoatschicht besteht vorzugsweise aus Polyurethan-, Epoxid-, ungesättigten Polyester- oder Vinylharzen.

Als Faserschicht können vorzugsweise Glasfaserwirrlagen, Glasfasergewebe und -gelege, geschnittene oder gemahlene Glas- oder Mineral-Fasern sowie Fasermatten, -vliese und -gewirke auf der Basis von Polymer-, Mineral-, Kohlenstoff-, Basalt-, Stahl-, Glas- bzw. Aramidfasern sowie deren Mischungen, besonders bevorzugt Glasfasermatten oder Glasfaservliese eingesetzt werden. Der Faseranteil in der mit Polyurethan versehenen Faserschicht beträgt vorzugsweise zwischen 40 und 90 Gew.-%, bevorzugt zwischen 50 und 80 Gew.-% und besonders bevorzugt zwischen 60 und 75 Gew.-%. Der Faseranteil kann bei Glasfaser verstärkten Bauteilen beispielsweise durch Veraschung bestimmt werden. Als Distanzhalterschicht können bevorzugt Kunststoffschäume, wie beispielsweise PVC-Schäume, PET-Schäume oder Polymethacrylimid-Schäume, Holz, wie beispielsweise Balsaholz oder Metall verwendet werden.

Die optional eingesetzte Kunststofffolie f) kann bei der Herstellung des Rotorblattes als Schicht in der Umhüllung verbleiben oder bei der Entformung der Hälfte des Rotorblattes entfernt werden. Sie dient insbesondere dazu, die Formhalbschale, die mit den zuvor genannten Schichten bestückt ist, im Herstellungsprozess zur Evakuierung vor dem Füllen mit dem flüssigen Harzgemisch abzudichten. Zwischen der mit Kunststoff versehenen Faserschicht e) und der Kunststofffolie f) können gegebenenfalls noch Hilfsmittel, wie z.B. Abreißfolien ("Peelfolien") oder Fließhilfsmittel, wie beispielsweise Fließgewebe oder Schlitzfolien eingesetzt werden. Bei Bedarf können diese zusätzlich eingesetzt werden, um eine gleichmäßige Tränkung der Faserschicht e) zu erreichen. Sie werden nach der Herstellung des Schichtaufbaus bevorzugt wieder entfernt, um im fertigen Rotorblatt Gewicht zu sparen.

Als Kunststoff wird Polyurethan eingesetzt. Polyurethane sind erhältlich durch die Umsetzung von Polyisocyanaten A) mit Verbindungen B) mit mindestens zwei gegenüber Isocyanaten reaktiven Wasserstoffatomen. Überraschenderweise konnte durch die Verwendung eines Glyzerin gestarteten Polypropylenoxidpolyols (propoxyliertes Glyzerin) als Komponente B) ein Polyurethan erhalten werden, das bei der Herstellung einen sehr langsamen Viskositätsanstieg zeigt, sich aber schnell aushärten lässt und das im fertigen glasfaserverstärkten Polyurethan deutlich bessere mechanische Eigenschaften als bei der Verwendung der bisher eingesetzten Kunststoffe zeigt.

Die erfindungsgemäß eingesetzte Reaktionsmischung wird in den vorbereiteten evakuierten Schichtaufbau injiziert.

Die Polyolformulierung enthält vorzugsweise als mit Glyzerin gestartete Polypropylenoxidpolyole solche, die eine OH-Zahl von 250 bis 1000 mg KOH/g, bevorzugt von 300 bis 800 mg KOH/g und besonders bevorzugt von 350 bis 500 mg KOH/g aufweisen. Die Viskosität der Polyole ist ≤ 500 mPas (bei 25°C). Bei der Verwendung von mehreren Startern zur Herstellung von Polypropylenoxidpolyolen beträgt der Gewichtsanteil des Glyzerins in der Startermischung vorzugsweise 50-100 Gew.- %, bevorzugt 80-100 Gew.-%. Besonders bevorzugt sind rein Glyzerin gestartete Polypropylenoxidpolyole.

Andere übliche Starter, wie beispielsweise 1,1,1-Trimethylolpropan, Triethanolamin, Sorbit, Pentaerythrit, Ethylenglykol, Propylenglykol können nur in Kombination mit Glyzerin eingesetzt werden.

Als Polyisocyanatkomponente kommen die üblichen aliphatischen, cycloaliphatischen und insbesondere aromatischen Di- und/oder Polyisocyanate zum Einsatz. Beispiele solcher geeigneten Polyisocyanate sind 1,4-Butylendiisocyanat, 1,5-Pentandiisocyanat, 1,6-Hexamethylendiisocyanat (HDI), Isophorondiisocyanat (IPDI), 2,2,4- und/oder 2,4,4-Trimethylhexamethylendiisocyanat, Bis(4,4'-isocyanatocyclohexyl)methan oder dessen Mischungen mit den übrigen Isomeren, 1,4-Cyclohexylendiisocyanat, 1,4-Phenylendiisocyanat, 2,4- und/oder 2,6-Toluylendiisocyanat (TDI), 1,5-Naphthylendiisocyanat, 2,2'-und/oder 2,4'- und/oder 4,4'-Diphenylmethandiisocyanat (MDI) und/oder höhere Homologe (pMDI) davon, 1,3- und/oder 1,4-Bis-(2-isocyanato-prop-2-yl)-benzol (TMXDI), 1,3-Bis-(isocyanatomethyl)benzol (XDI). Als Isocyanat wird vorzugsweise Diphenylmethandiisocyanat (MDI) und insbesondere Gemische aus Diphenylmethandiisocyanat und Polyphenylenpolymethylenpolyisocyanat (pMDI) verwendet. Die Gemische aus Diphenylmethandiisocyanat und Polyphenylenpolymethylenpolyisocyanat (pMDI) haben einen bevorzugten Monomergehalt zwischen 50 und 100 Gew.-%, bevorzugt zwischen 60 und 95 Gew.-%, besonders bevorzugt zwischen 70 und 90 Gew.-%. Der NCO-Gehalt des verwendeten Polyisocyanates sollte vorzugsweise über 25 Gew.-%, bevorzugt über 30 Gew.-%, besonders bevorzugt über 31,4 Gew.-% liegen. Vorzugsweise sollte das eingesetzte MDI einen Gehalt an 2,2'- Diphenylmethandiisocyanat und an 2,4'- Diphenylmethandiisocyanat von zusammen mindestens 3 Gew.-%, bevorzugt mindestens 20 Gew.-% aufweisen. Die Viskosität des Isocyanates sollte vorzugsweise ≤ 250 mPas (bei 25°C), bevorzugt von ≤ 100 mPas (bei 25°C) und besonders bevorzugt von ≤ 30 mPas (bei 25°C) sein.

Die Polyurethanreaktionsmischung kann bevorzugt neben den bekannten reaktiven Komponenten und Additiven und Zusatzmitteln vorzugsweise Füllstoffe, wie Kohlenstoffnanoröhrchen, Bariumsulfat, Titandioxid, Kurzglasfasern oder natürliche faser- oder plättchenförmige Minerale, wie z.B. Wollastonite oder Muskowite enthalten. Als Additive und Zusatzmittel werden vorzugsweise Stabilisatoren, Entschäumer, Katalysatoren und latente Katalysatoren eingesetzt. Weitere bekannte Additive und Zusatzmittel können bei Bedarf verwendet werden.

Geeignete Polyurethansysteme sind insbesondere solche, die transparent sind. Da bei der Herstellung größerer Formteile eine niedrige Viskosität für eine gleichmäßige Füllung der Form und Benetzung der Fasern notwendig ist, sind daher Polyurethansysteme besonders geeignet, die eine Viskosität von ≤ 5000 mPas (bei 35°C; 60 min. nach Vermischen der Komponenten), bevorzugt ≤ 4000 mPas, besonders bevorzugt ≤ 3500 mPas aufweisen und die direkt nach dem Vermischen der Komponenten der Reaktivmischung eine Viskosität von 30 bis 500 mPas (bei 35 °C), bevorzugt zwischen 40 und 150 mPas (bei 35 °C) und besonders bevorzugt zwischen 50 und 100 mPas (bei 35 °C) aufweisen. Vorzugsweise wird das Umsetzungsverhältnis zwischen Isocyanatkomponente und Polyolformulierung so gewählt, dass im Reaktionsgemisch das Verhältnis von Anzahl an Isocyanatgruppen zu Anzahl an gegenüber Isocyanat reaktiven Gruppen zwischen 0,9 und 1,5, bevorzugt zwischen 1,0 und 1,2, besonders bevorzugt zwischen 1,02 und 1,15 liegt.

Das erhaltene Polyurethan hat vorzugsweise eine Festigkeit im Zugversuch nach DIN EN ISO 527 von über 70 MPa, bevorzugt über 80 MPa, um den hohen mechanischen Beanspruchungen in einem Rotorblatt standzuhalten.

In einer bevorzugten Ausführungsform wird die Reaktionsmischung aus Isocyanatkomponente und Polyolkomponente bei einer Temperatur zwischen 20 und 80 °C, besonders bevorzugt zwischen 25 und 40 °C, injiziert.

Nach dem Einfüllen der Reaktionsmischung kann das Aushärten des Polyurethans durch Heizen der Form beschleunigt werden. In einer bevorzugten Ausführungsform wird die injizierte Reaktionsmischung aus Isocyanatkomponente und Verbindungen mit mindestens zwei gegenüber Isocyanaten reaktiven Wasserstoffatomen bei einer Temperatur zwischen 40 und 160 °C, bevorzugt zwischen 60 und 120 °C, besonders bevorzugt zwischen 70 und 90 °C, ausgehärtet.

Die Erfindung soll anhand der nachfolgenden Beispiele näher erläutert werden.

### Beispiele

Um die Matrixeigenschaften zu bestimmen wurden Formkörper (Platten) aus verschiedenen Polyurethansystemen hergestellt und mit einem Standard Epoxid-Harzsystem verglichen. Die Polyole wurden bei einem Druck von 1 mbar für 60 Minuten entgast und danach mit Desmodur® VP.PU 60RE11 versetzt und für ca. 5 Minuten bei einem Druck von 1 mbar entgast und danach in die Plattenformen gegossen. Die Dicke der Platten war 4 mm. Die Platten wurden bei Raumtemperatur gegossen und über Nacht in einem auf 80 °C geheizten Trockenschrank getempert. Man erhielt transparente Platten. Analog wurden das Epoxid-Harzsystem aus Larit RIM 135 und dem Härter Larit RIMH 137 entgast, in Platten gegossen und über Nacht getempert. Die Mengenangaben und Eigenschaften sind der Tabelle zu entnehmen.

Aus den Platten wurden Probenkörper für einen Zugversuch nach DIN EN ISO 527 hergestellt und der E-Modul und die Festigkeit bestimmt.

Die Polyurethan-Platten 1 bis 4 konnten bereits nach 2 Stunden ohne Deformation entformt werden, bei Vergleichsbeispiel 5 war dies erst nach einer deutlich längeren Zeit von etwa 12 Stunden möglich.

Mit der Zusammensetzung aus Beispiel 1 und 2 können transparente, glasfaserverstärkte Polyurethanwerkstoffe durch das Vakuuminfusionsverfahren mit einem Glasfasergehalt von über 60 Gew.-% hergestellt werden.

Für die Herstellung faserverstärkter Formkörper durch Vakuuminfusion wurde ein Teflonrohr mit einem Durchmesser von 6 mm mit Glasfaserrovings (Vetrotex^{®} EC2400 P207) gefüllt, so dass ein Glasfasergehalt von ca. 65 Gewichts-%, bezogen auf das spätere Bauteil, erreicht wurde. Eine Seite des Teflonrohres wurde in die Reaktionsmischung getaucht und an der anderen Seite des Rohres wurde mit einer Ölpumpe Vakuum angelegt, so dass die Reaktionsmischung in das Rohr gesogen wurde. Nachdem die Rohre befüllt waren, wurden sie für 10 Stunden bei 70 °C getempert. Das Teflonrohr wurde jeweils entfernt und ein transparenter mit Fasern verstärkter Formkörper erhalten.

Die Viskosität wurde 60 Minuten nach dem Vermischen der Komponenten bei einer konstanten Temperatur von 35 °C mit einem Rotationsviskosimeter bei einer Scherrate von 60 1/s bestimmt. Bei der Herstellung größerer Formteile ist eine bestimmte Zeit lang eine niedrige Viskosität für eine gleichmäßige Füllung der Form notwendig.

### Ausgangsverbindungen:

Polyol1: Glyzerin gestartetes Polypropylenoxidpolyol mit einer Funktionalität von 3 und einer OH-Zahl von 450 mg KOH/g und einer Viskosität von 420 mPas (bei 25°C).
Polyol2: Glyzerin gestartetes Polypropylenoxidpolyol mit einer Funktionalität von 3 und einer OH-Zahl von 400 mg KOH/g und einer Viskosität von 370 mPas (bei 25°C).
Polyol3: Trimethylolpropan (TMP) gestartetes Polypropylenoxidpolyol mit einer Funktionalität von 3 und einer OH-Zahl von 380 mg KOH/g und einer Viskosität von 650 mPas (bei 25°C).
Polyol4: Glyzerin und Sorbit (Gewichtsverhältnis 30 zu 70) gestartetes Polypropylenoxidpolyol mit einer OH-Zahl von 430 mg KOH/g und einer Viskosität von ca. 9000 mPas (bei 20°C).

Desmodur® VP.PU 60RE11 ist ein Gemisch von Diphenylmethan-4,4'-diisocyanat (MDI) mit Isomeren und höherfunktionellen Homologen mit einem NCO-Gehalt von 32,6 Gew.-%; Viskosität bei 25°C: 20 mPas.

Larit RIM 135 (L-135i) und Larit RIMH 137 sind Produkte der Firma Lange+Ritter. Larit RIM 135 ist ein Epoxid-Resin auf Basis eines Bisphenol-A-Epichlorhydrinharzes und eines 1,6-Hexandioldiglycidylethers mit einem Epoxidäquivalent von 166-185 g/Äquivalent und RIMH 137 ist ein Härter auf Basis von IPDA (Isophorondiamin) und Alkyletheraminen mit einer Aminzahl von 400-600 mg KOH/g.

Alle Mengenangaben in der folgenden Tabelle sind in Gewichtsteilen.

**Tabelle:**

| | Beispiel1 | Beispiel2 | Vergleichsbeispiel3 | Vergleichsbeispiel4 | Vergleichsbeispiel5 |
|---|---|---|---|---|---|
| Polyol1 | 200 | | | | |
| Polyol2 | | 200 | | | |
| Polyol3 | | | 200 | 170 | |
| Polyol4 | | | | 30 | |
| Desmodur ^{®} VP.PU 60RE11 | 227 | 202 | 192 | 196 | |
| Molares Verhältnis NCO/OH | 110/100 | 110/100 | 110/100 | 110/100 | |
| Larit RIM 135 | | | | | 300 |
| Larit RIMH 137 | | | | | 90 |
| | | | | | |
| Viskosität direkt nach dem Vermischen bei 35°C [mPas] | 65 | 66 | 74 | 91 | 126 |
| Viskosität 60 min. nach dem Vermischen bei 35°C [mPas] | 3490 | 1420 | 7190 | 14300 | 234 |
| Zugversuch: E-Modul [MPa] | 3038 | 2936 | 2990 | n.b. | 2950 |
| Zugversuch: Festigkeit [MPa] | 80,3 | 72,9 | 69,1 | n.b. | 68 |

| | | | | | |
|---|---|---|---|---|---|
| n.b. - nicht bestimmt, da die Viskosität nach 60 Minuten zu hoch war. | | | | | |

Die erfindungsgemäßen Beispiele 1 und 2 zeigen bei einer kurzen Entformzeit von 2 Stunden eine sehr gute Kombination von einem langsamen Viskositätsanstieg bei einer niedrigen Anfangsviskosität bei 35°C mit einer Viskosität bei 35°C von unter 5000 mPas nach 60 Minuten, was für die Herstellung von großen faserverstärkten Konstruktionsbauteilen sehr wichtig ist, und gleichzeitig sehr gute mechanische Eigenschaften, wie z.B. eine Festigkeit von über 70 MPa. Im Gegensatz dazu zeigen die Vergleichsbeispiele 3 und 4 einen deutlich schnelleren Viskositätsanstieg bei einer etwas höheren Anfangsviskosität bei 35°C und einer Viskosität bei 35°C von weit über 5000 mPas nach 60 Minuten, was die Herstellung von großen faserverstärkten Bauteilen sehr erschwert. Vergleichsbeispiel 5 zeigt zwar einen sehr langsamen Viskositätsanstieg, aber gleichzeitig eine deutlich längere Entformzeit (etwa 12 Stunden) als Beispiel 1 und 2 (etwa 2 Stunden). Dies führt zu einer niedrigen Produktivität. Außerdem sind die mechanischen Eigenschaften mit einer Festigkeit von unter 70 MPa schlecht.

## Patentansprüche

1. Verwendung eines Schichtaufbaus hergestellt durch das vakuumunterstützte Infusionsverfahren bei der Herstellung von Rotorblättern für Windkraftanlagen, wobei der Schichtaufbau folgende Schichten aufweist
a) eine Trennmittelschicht
b) gegebenenfalls eine Gelcoatschicht
c) eine mit Kunststoff behandelte Faserschicht
d) gegebenenfalls eine Distanzhalterschicht
e) eine mit Kunststoff versehene Faserschicht
f) gegebenenfalls eine Kunststofffolie
**dadurch gekennzeichnet, dass** als Kunststoff Polyurethan eingesetzt wird, das erhältlich ist durch Umsetzung eines Reaktionsgemisches bestehend aus
A) einem oder mehreren Polyisocyanaten
B) einer Polyolformulierung enthaltend ein oder mehrere mit Glyzerin gestartete Polypropylenoxidpolyole
mit einer Viskosität von ≤ 500 mPas (bei 25°C);
C) gegebenenfalls Additiven und/oder Zusatzmitteln
D) gegebenenfalls Füllstoffen.

2. Rotorblätter für Windkraftanlagen, die eine Umhüllung aufweisen, die zumindest teilweise aus einem Schichtaufbau mit folgenden Schichten besteht
a) eine Trennmittelschicht
b) gegebenenfalls eine Gelcoatschicht
c) eine mit Kunststoff behandelte Faserschicht
d) gegebenenfalls eine Distanzhalterschicht
e) eine mit Kunststoff versehene Faserschicht
f) gegebenenfalls eine Kunststofffolie
hergestellt durch das vakuumunterstützte Infusionsverfahren,
**dadurch gekennzeichnet, dass** als Kunststoff Polyurethan eingesetzt wird, das erhältlich ist durch Umsetzung eines Reaktionsgemisches bestehend aus
A) einem oder mehreren Polyisocyanaten
B) einer Polyolformulierung enthaltend ein oder mehrere mit Glyzerin gestartete Polypropylenoxidpolyole
mit einer Viskosität von ≤ 500 mPas (bei 25°C);
C) gegebenenfalls Additiven und/oder Zusatzmitteln
D) gegebenenfalls Füllstoffen.

3. Verfahren zur Herstellung von Rotorblättern gemäß Anspruch 2 für Windkraftanlagen, die eine Umhüllung aufweisen, die zumindest teilweise aus einem Schichtaufbau mit folgenden Schichten besteht
a) eine Trennmittelschicht
b) gegebenenfalls eine Gelcoatschicht
c) eine mit Kunststoff behandelte Faserschicht
d) gegebenenfalls eine Distanzhalterschicht
e) eine mit Kunststoff versehene Faserschicht
f) gegebenenfalls eine Kunststofffolie,
hergestellt durch das vakuumunterstützte Infusionsverfahren,
**dadurch gekennzeichnet, dass** die Faserschichten mit einem Reaktionsgemisch zur Herstellung von Polyurethan als Kunststoff behandelt werden, wobei das Reaktionsgemisch erhältlich ist aus den Komponenten
A) einem oder mehreren Polyisocyanaten
B) einer Polyolformulierung enthaltend ein oder mehrere mit Glyzerin gestartete Polypropylenoxidpolyole
mit einer Viskosität von ≤ 500 mPas (bei 25°C);
C) gegebenenfalls Additiven und/oder Zusatzmitteln
D) gegebenenfalls Füllstoffen
besteht.

4. Verfahren gemäß Anspruch 3, **dadurch gekennzeichnet, dass** das Reaktionsgemisch als Isocyanat Diphenylmethandiisocyanat und/oder Polyphenylenpolymethylenpolyisocyanat mit einem NCO-Gehalt von mehr als 25 Gew.-% enthält.

5. Verfahren gemäß Anspruch 3, **dadurch gekennzeichnet, dass** das Reaktionsgemisch als mit Glyzerin gestartetes Polypropylenoxidpolyol eine Verbindung mit einer OH-Zahl von 300 bis 800 mg KOH/g enthält.

6. Verfahren gemäß Anspruch 3, **dadurch gekennzeichnet, dass** das Reaktionsgemisch bei einer Temperatur zwischen 20 und 80°C in die Faserschichten appliziert wird.

7. Verfahren gemäß Anspruch 3, **dadurch gekennzeichnet, dass** das Reaktionsgemisch bei einer Temperatur zwischen 40 und 160 °C ausgehärtet wird.

8. Verfahren gemäß Anspruch 3, **dadurch gekennzeichnet, dass** bei einer konstanten Temperatur von 35°C das Reaktionsgemisch 60 Minuten nach dem Vermischen eine Viskosität ≤ 5000 mPas aufweist.

## Claims

1. Use of a layer structure produced by the vacuum-assisted infusion process in the production of rotor blades for wind power plants, wherein the layer structure has the following layers
a) a release agent layer
b) optionally a gel coat layer
c) a fibre layer treated with plastics material
d) optionally a spacer layer
e) a fibre layer provided with plastics material
f) optionally a plastics film,
**characterised in that** there is used as the plastics material polyurethane obtainable by reaction of a reaction mixture comprising
A) one or more polyisocyanates
B) a polyol formulation comprising one or more glycerol-started polypropylene oxide polyols
with a viscosity of ≤ 500 mPas (at 25°C);
C) optionally additives and/or added ingredients
D) optionally fillers.

2. Rotor blades for wind power plants having a covering which consists at least partially of a layer structure having the following layers
a) a release agent layer
b) optionally a gel coat layer
c) a fibre layer treated with plastics material
d) optionally a spacer layer
e) a fibre layer provided with plastics material
f) optionally a plastics film,
produced by the vacuum-assisted infusion process,
**characterised in that** there is used as the plastics material polyurethane obtainable by reaction of a reaction mixture comprising
A) one or more polyisocyanates
B) a polyol formulation comprising one or more glycerol-started polypropylene oxide polyols
with a viscosity of ≤ 500 mPas (at 25°C);
C) optionally additives and/or added ingredients
D) optionally fillers.

3. Process for the production of rotor blades according to claim 2 for wind power plants, which rotor blades have a covering which consists at least partially of a layer structure having the following layers
a) a release agent layer
b) optionally a gel coat layer
c) a fibre layer treated with plastics material
d) optionally a spacer layer
e) a fibre layer provided with plastics material
f) optionally a plastics film,
produced by the vacuum-assisted infusion process,
**characterised in that** the fibre layers are treated with a reaction mixture for the production of polyurethane as the plastics material, wherein the reaction mixture is obtainable from the components
A) one or more polyisocyanates
B) a polyol formulation comprising one or more glycerol-started polypropylene oxide polyols
with a viscosity of ≤ 500 mPas (at 25°C);
C) optionally additives and/or added ingredients
D) optionally fillers.

4. Process according to claim 3, **characterised in that** the reaction mixture comprises as the isocyanate diphenylmethane diisocyanate and/or polyphenylenepolymethylene polyisocyanate having an NCO content of more than 25 wt.%.

5. Process according to claim 3, **characterised in that** the reaction mixture comprises as the glycerol-started polypropylene oxide polyol a compound having an OH number of from 300 to 800 mg KOH/g.

6. Process according to claim 3, **characterised in that** the reaction mixture is applied to the fibre layers at a temperature of from 20 to 80°C.

7. Process according to claim 3, **characterised in that** the reaction mixture is cured at a temperature of from 40 to 160°C.

8. Process according to claim 3, **characterised in that**, at a constant temperature of 35°C, the reaction mixture has a viscosity ≤ 5000 mPas 60 minutes after mixing.

## Revendications

1. Utilisation d'une structure stratifiée fabriquée par le procédé d'infusion assisté par un vide lors de la fabrication d'aubes de rotor pour éoliennes, la structure stratifiée comprenant les couches suivantes :
a) une couche d'agent de démoulage,
b) éventuellement une couche d'enduit gélifié,
c) une couche de fibres traitée avec un plastique,
d) éventuellement une couche d'espaceur,
e) une couche de fibres munie d'un plastique,
f) éventuellement un film plastique,
**caractérisée en ce qu'**un polyuréthane est utilisé en tant que plastique, qui peut être obtenu par mise en réaction d'un mélange réactionnel constitué par :
A) un ou plusieurs polyisocyanates,
B) une formulation de polyol contenant un ou plusieurs polyoxyde de propylène-polyols démarrés avec de la glycérine,
ayant une viscosité ≤ 500 mPas (à 25 °C) ;
C) éventuellement des additifs et/ou des ajouts,
D) éventuellement des charges.

2. Aubes de rotor pour éoliennes, qui comprennent une gaine, qui est au moins partiellement constituée d'une structure stratifiée comprenant les couches suivantes :
a) une couche d'agent de démoulage,
b) éventuellement une couche d'enduit gélifié,
c) une couche de fibres traitée avec un plastique,
d) éventuellement une couche d'espaceur,
e) une couche de fibres munie d'un plastique,
f) éventuellement un film plastique,
fabriquée par le procédé d'infusion assisté par un vide,
**caractérisées en ce qu'**un polyuréthane est utilisé en tant que plastique, qui peut être obtenu par mise en réaction d'un mélange réactionnel constitué par :
A) un ou plusieurs polyisocyanates,
B) une formulation de polyol contenant un ou plusieurs polyoxyde de propylène-polyols démarrés avec de la glycérine,
ayant une viscosité ≤ 500 mPas (à 25 °C) ;
C) éventuellement des additifs et/ou des ajouts,
D) éventuellement des charges.

3. Procédé de fabrication d'aubes de rotor selon la revendication 2 pour des éoliennes, qui comprennent une gaine, qui est au moins partiellement constituée d'une structure stratifiée comprenant les couches suivantes :
a) une couche d'agent de démoulage,
b) éventuellement une couche d'enduit gélifié,
c) une couche de fibres traitée avec un plastique,
d) éventuellement une couche d'espaceur,
e) une couche de fibres munie d'un plastique,
f) éventuellement un film plastique,
fabriquée par le procédé d'infusion assisté par un vide,
**caractérisé en ce que** les couches de fibres sont traitées avec un mélange réactionnel pour la fabrication d'un polyuréthane en tant que plastique, le mélange réactionnel pouvant être obtenu à partir des composants suivants :
A) un ou plusieurs polyisocyanates,
B) une formulation de polyol contenant un ou plusieurs polyoxyde de propylène-polyols démarrés avec de la glycérine,
ayant une viscosité ≤ 500 mPas (à 25 °C) ;
C) éventuellement des additifs et/ou des ajouts,
D) éventuellement des charges.

4. Procédé selon la revendication 3, **caractérisé en ce que** le mélange réactionnel contient en tant qu'isocyanate du diisocyanate de diphénylméthane et/ou du polyisocyanate de polyphénylène-polyméthylène ayant une teneur en NCO de plus de 25 % en poids.

5. Procédé selon la revendication 3, **caractérisé en ce que** le mélange réactionnel contient en tant que polyoxyde de propylène-polyol démarré avec de la glycérine un composé ayant un indice OH de 300 à 800 mg KOH/g.

6. Procédé selon la revendication 3, **caractérisé en ce que** le mélange réactionnel est appliqué dans les couches de fibres à une température comprise entre 20 et 80 °C.

7. Procédé selon la revendication 3, **caractérisé en ce que** le mélange réactionnel est durci à une température comprise entre 40 et 160 °C.

8. Procédé selon la revendication 3, **caractérisé en ce que** le mélange réactionnel présente une viscosité ≤ 5 000 mPas à une température constante de 35 °C 60 minutes après le mélange.
